# EUROPEAN PATENT APPLICATION

(11) **EP 0 735 792 A1**
(43) Date of publication of application: **02.10.1996**
(21) Application number: 95200821.7
(22) Date of filing: 31.03.1995
(51) Int. Cl.: H04Q 11/00, H04Q 3/545, H04M 3/36

(54) **Telecommunication exchange simulator**

(71) Applicant: ALCATEL BELL Naamloze Vennootschap, B-2018 Antwerpen 1 (BE)
(72) Inventor: Massant, Jan Coleta Eduard, B 2800 Mechelen (BE); Cornelis, Chris Jozef Elza, B 2070 Burcht (BE)

(57) **Abstract**

A telecommunication exchange simulator adapted to evaluate the operational parameters (GET, DIM, PRF) of one or more telecommunication exchanges in their environment and in function of sequences of connection handling events (CHE) arranged in connection handling scenarios (CHS). The scenarios are updated by the processing execution times (PET) of the events and by the parameters (OSP) of the operating system that are separately applied to the simulator. As a result, the simulator is easy to handle and to supervise and simulation of complex scenarios and of different types of exchanges is possible with a minimum of changes. Moreover, most any type of exchange can be tested in its own environment owing to a dynamic analyser (DA) to which telecommunication load specifications (LSP) are also applied and which has a flexible object oriented structure. To even more facilitate the supervision of the exchange, the scenarios, times and parameters are in the form of sequence charts modifiable by means of a graphical editor.

## Description

The present invention relates to a telecommunication exchange simulator adapted to evaluate the operational parameters of a telecommunication exchange by processing connection handling events.

Such a telecommunication exchange simulator is generally known in the art. It consists of a software program simulating a real telecommunication exchange and to which telecommunication events are applied in order to assess its behaviour. In order to reflect the reality, the telecommunication events include not only pure connection handling events that are specific to telecommunication operations to be simulated, but also other parameters closely linked to the processing of these events such as the execution times of processes, memories, buffers, queue-sizes and all the influences of the operating system thereon. Since the complexity of the telecommunication exchanges increases, their simulation by means of processing such telecommunication events becomes more and more difficult to design. Triggering the process of large amounts of telecommunication events and/or sophisticated arrangements is thereof also difficult to supervise.

An object of the present invention is to provide a telecommunication exchange simulator of the above known type but which is adapted to assess the operational parameters of a telecommunication exchange in relatively complex arrangements of connection handling events, i.e. for relatively complex operation cases, while remaining easy and simple to supervise.

According to the invention, this object is achieved due to the fact that said connection handling events are arranged in connection handling scenarios, each connection handling scenario being a sequence of at least one of said connection handling events, and that said telecommunication exchange simulator includes translation means adapted to generate translated scenarios corresponding to said connection handling scenarios adapted by taking into account processing execution times of said events and parameters representative of the operating system of at least one telecommunication exchange, and further includes analysis means coupled to said translation means and adapted to derive from said translated scenarios said operational parameters of said exchange.

In this way, a connection handling scenario only includes a sequence of connection handling events, i.e. of pure telecommunication operations, and is not overloaded with other parameters such as those of the processing execution times and the operating system. As a result, the effort required to adapt the connection handling scenarios for making various performance analyses is minimised and even complex connection handling scenarios, built up as sequences of discrete connection handling events, remain easy to define and to supervise. A complex simulation of several different operation cases running simultaneously may also be realised without dramatically reducing the understanding of the system. On the other hand, the parameters of the processing execution times and of the operating system are applied to the translation means independently to the connection handling events and are thus also simplified. As a result, different types of telecommunication exchanges may be simultaneously tested.
An additional feature of the present invention, is that said translation means includes:
- telecommunication scenario generation means adapted to receive said connection handling scenarios and said processing execution times and to derive therefrom telecommunication scenarios corresponding to said connection handling scenarios adapted by taking into account said processing execution times;
- module generator means adapted to receive said operating system parameters and to provide generic modules under the form of scenarios defining sequences of operating system events; and
- combiner means adapted to combine said telecommunication scenarios and said generic modules into said translated scenarios.

The telecommunication simulator is thereby adapted to simulate different types of telecommunication exchanges without having to redesign the whole simulation model and with a minimum of changes at its input. By handling separately the connection handling scenarios including only pure telecommunication operations, the processing execution times linked to these scenarios and the operating system parameters proper to the telecommunication system, the update of only one of the latter remains easy. For instance, if only the type of telecommunication exchange is changed but that the processes of the connection handling events remain the same, only the operating system parameters have to be modified as input of the module generator means. Furthermore, connection handling scenarios that were defined for testing a specific telecommunication exchange may still be applied to other types of telecommunication exchanges to be tested, and this concurrently for several types of exchanges.

Another characteristic feature of the present invention is that said analysis means includes a static analysis means which is a software package coupled to said translation means and which is adapted to establish by running, from said translated scenarios, execution times of said connection handling scenarios and dimensioning criteria for said telecommunication exchange, said execution times and said dimensioning crirteria forming part of said operational parameters of said exchange.

This means that the static analysis means provide results concerning the capacity of the exchange in function of the translated scenarios individually applied thereto.

Also another characteristic feature of the present invention is that said analysis means further includes a dynamic analysis means which is a software package coupled to said static analysis means and which is adapted to receive said translated scenarios, said dimensioning criteria and load specifications for said exchange, and to derive therefrom, by running, performances of the telecommunication exchange in its environment, said performances forming part of said operational parameters of said exchange.

The load specifications include for instance traffic and response parameters such as scenario inter-arrival times and delay or response time start and stop indicators.

In this way, the real environment of the telecommunication exchange to be tested is accurately reproduced by taking into account all the real functional parameters of the telecommunication system. Thanks to the static analyser means and the dynamic analyser means, it is possible to evaluate all the operational parameters of the telecommunication exchange that is simulated.

Still another characteristic feature of the present invention is that said dynamic analysis means has an object oriented structure adapted to perform discrete event simulations.

It is well known that the object oriented language allows to instantiate several classes without overloading the simulation software. By using this flexibility of the object oriented language in the present case of a telecommunication exchange simulator, several connection handling processing units and several telecommunication exchanges of different types may for instance be simultaneously instantiated. The number of instantiations depends of the load and of the dimensions of the telecommunication exchange. These dimensions are, as mentioned above, provided by the static analysis means and are, amongst other, dependent on the number of scenarios, the number of telecommunication exchanges and the number and type of different control process units that are simultaneously running.

The present invention is also further characterized in that said object oriented structure is adapted to instantiate a plurality of class type handlers, each of said class type handlers corresponding to a particular type of control process unit class, and in that each of said class type handlers is adapted to create a plurality of control process unit instances, each of said control process unit instances having the type of said control process unit class.

It is thus possible to simulate different telecommunication exchanges each including several processors of the same or of different types. The different instantiated control process units are of the types needed to simulate both the telecommunication exchange(s) and the above call handling scenarios.

Also another characteristic feature of the present invention is that said connection handling scenarios, said processing execution times and said operating system parameters are applied to said translation means in the form of sequence charts modifiable by means of a graphical editor.

Sequence charts are simple to edit and a graphical representation of a sequence of telecommunication events, even complex, is much more understandable than pure textual definitions because the sequence dependencies and interactions are then more clearly shown.

The above mentioned and other objects and features of the invention will become more apparent and the invention itself will be best understood by referring to the following description of an embodiment taken in conjunction with the accompanying drawings wherein:
- Fig. 1 represents a block diagram of the telecommunication exchange simulator according to the invention; and
- Fig. 2 shows in more detail a possible software structure of the dynamic analyser DA of Fig. 1.

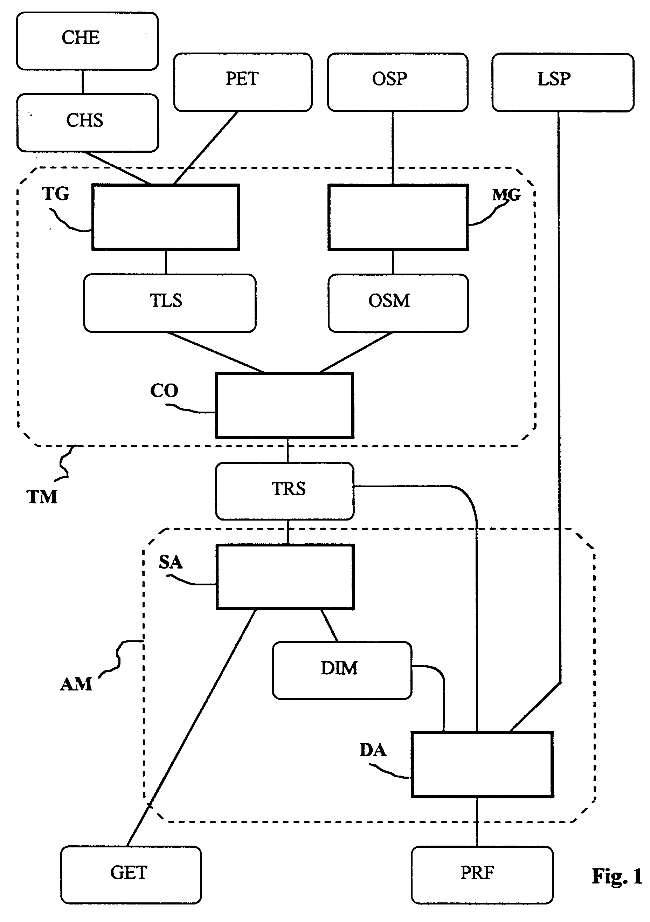

The telecommunication exchange simulator schematically represented in the Fig. 1 is used to assess both static and dynamic operational parameters of a complex telecommunication exchange such as a Global System for Mobile communication (GSM) or a network of exchanges. Static evaluation provides for detailed capacity and dimensioning figures taking into account the execution of various components such as processing time, message handling and parameters of the operating system. It also allows for investigation and dimensioning of the system resources. Dynamic evaluation applies the results from the static analysis to a discrete event simulator in order to characterise the queuing and response time behaviour of the whole telecommunication system.

To this end, the simulator includes different software programmes amongst which translation means TM and analysis means AM. The translation means TM includes a telecommunication scenario generator TG, a module generator MG and a combiner CO, whilst the analysis means AM includes a static analyser SA and a dynamic analyser DA. These software packages are schematically represented in the Fig. 1 by rectangles with edges in bold, whilst the input and output data thereof, described hereafter, are represented by rounded rectangles. Operational parameters such as global execution times GET, dimensioning criteria DIM and performances PRF of the telecommunication exchange in its own environment may be obtained from these software packages of which the functions of these will be explained below.

The telecommunication scenario generator TG is a software program adapted to receive connection handling scenarios CHS that are sequences created from discrete connection handling events CHE. The connection handling events CHE are defined in the form of sequence charts using a graphical editor, generally known in the art, that allows the system designer to specify sequences of actions to be performed. The graphical representation gives a perfect visualisation of the sequence of actions to perform in order to accomplish specific tasks such as call set-up, call release, handover or location update, the latter in case of a mobile communication exchange. Moreover, such detailed connection handling scenario CHS sequence charts are simple to edit and are more understandable than purely textual definitions since the sequence dependencies and interactions are much clearly shown.

However, as seen from performance modelling point of view and although it is simple to handle and to supervise, a connection handling scenario CHS is incomplete as it contains for instance no processing execution time indications, no priority assignments and it does not reflect the tasks related to the use of message communications and the operating system nucleus. This missing information is added to the above simple connection handling scenarios CHS as will be indicated below.

Laboratory measurements are first performed on a physical system to obtain detailed processing execution times PET for each task or process to be simulated. This is done for all the possible scenarios and for all the control process units needed to simulate the execution of these scenarios and those used in the one or more telecommunication exchanges to be tested. These processing execution times PET of the events CHE represent the source and destination process in the form of sequence charts. They are applied, together with the connection handling scenarios CHS, to the telecommunication scenario generator TG.

The telecommunication scenario generator TG outputs telecommunication scenarios TLS corresponding to the connection handling scenarios CHS but updated with the results of the laboratory measurements, i.e. modified or adapted to take into account the processing execution times PET corresponding to the connection handling events CHE used. These telecommunication scenarios TLS are still in the form of sequence charts but are obviously more complex than the above connection handling scenarios CHS.

Further laboratory measurements are performed to provide parameters OSP that are dependent on the operating system in which each specific task or process is performed. These operating system parameters OSP are for instance the message communication and operating system nucleus execution times as well as their respective priorities. The parameters OSP relate to the actions performed by the operating system nucleus for scheduling and dispatching the tasks, the network handler and the message handler for external and internal message communication.

The operating system parameters OSP are applied to the module generator MG that provides at its output generic modules OSM also in the form of sequence charts. The modules OSM are as small scenarios defining sequences of operating system events that are frequently used to perform a number of specific tasks related to the detection of external events, intra and inter process/processor communication or operating system specific functions.

Both the telecommunication scenarios TLS and the generic modules OSM are applied to the combiner CO. The combiner CO evaluates the received sequence charts on a per scenario basis and updates the telecommunication scenarios TLS with the generic modules OSM. In more detail, a generic module OSM is not only inserted inbetween telecommunication scenarios TLS as a kind of subscenario, but the operation of the combiner CO also covers the algorithms that define which module to use and where to insert it. The results are translated into a matrix file format called translated scenario TRS that thus includes the sequences of connection handling events or scenarios to be simulated and all the parameters relative to the concerned execution times, types of control processing units, message handling and operating system to be simulated.

The translated scenarios TRS are applied to the static analyser SA which is a software program including procedures that, on basis of the different translated scenarios TRS received, calculates the global execution times GET per scenario as well as per process or functional task.

Additional information obtained from the static analyser SA consists of:
- execution time tables per scenario and per processor, process, priority, etc... These tables provide for the basic input of the control processing units capacity evaluation and the simulation under load conditions which will be performed by the dynamic analyser DA described later;
- a message matrix table indicating the type and number of messages used for internal and external processor communication;
- an analysis of the response branches with indication of execution and transmission elapsed time; and
- an analysis of parallel branches and junctions as defined by the sequence of connection handling events.

With these results, the dimensioning criteria DIM of the system may also be defined.

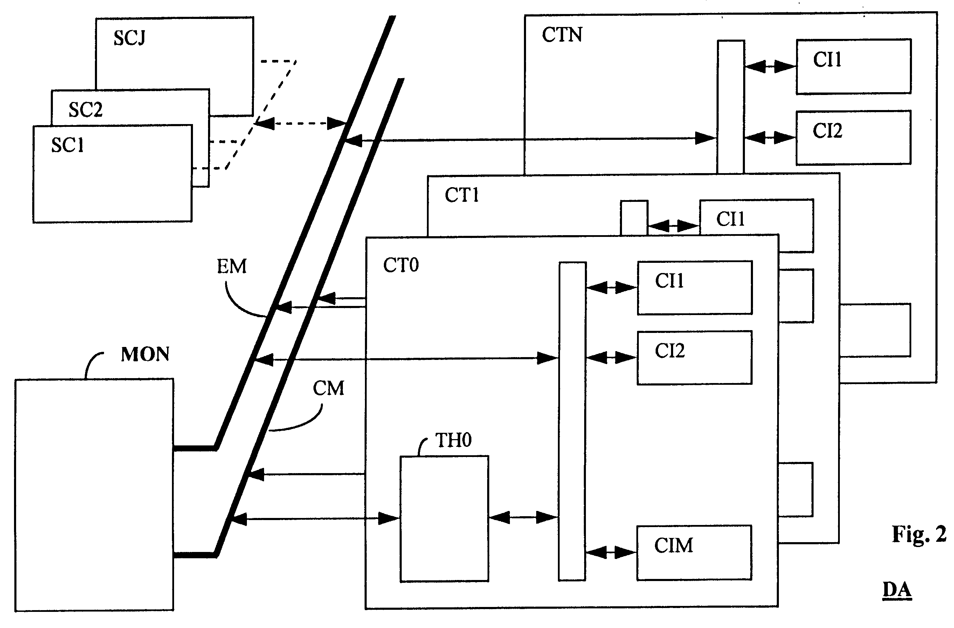

In a next step, the designer must evaluate the traffic and connection/message handling capability of the system in order to check its performance under load conditions. This in turn has an important impact on system design and architecture. The throughput evaluation of a large telecommunication system, e.g. a GSM based network of exchanges, including a plurality of processors becomes rapidly very sophisticated. This is for instance due to the complex queuing systems appearing in practice. The problem of testing such a complex system is solved here by using a dynamic analyser DA developed in an object oriented language. A possible software structure of the a dynamic analyser DA is schematically represented in Fig. 2.

All the parameters that are characteristic of the telecommunication exchange(s) to be tested in its(their) environment are first defined. These parameters, also called load specifications LSP, include for instance subscriber traffic, holding time, delays and mobility parameters.

The load specifications LSP, together with the translated scenarios TRS and the dimensioning criteria DIM derived from the global results of the static analyser SA are applied to the dynamic analyser DA. As already mentioned, the dynamic analyser DA has an object oriented software structure adapted to perform a discrete event simulation that provides for the queuing and response behaviour of the system in its environment.

This entails:
- distribution of the appropriate scenarios according to their inter arrival times;
- distribution of the processes amongst the processors as it would be the case in a real environment; and
- indication of start and end points for each of the scenario response times that require an observation.

An important property of the discrete event simulation is that events take place without time consumption. The tasks are divided into instantaneous events and process execution times, whilst queues, etc... are updated at each event. Between events, the dynamic analyser DA only advances its global time clock on the basis of the next event to occur.

The backbone structure of the dynamic analyser DA consists of a set global classes implemented in the known C++ language. It includes:
- a simulation monitor MON that controls (CM) the simulator resources, advances the global clock, and dispatches (EM) the requested tasks to the destination class instances CI1, CI2, ..., CIM of various class types CT0, CT1, .., CTN. A class instance can be dedicated to a processor type or a more general structure that collects statistics for response time observations;
- a scenario class responsible for loading and distributing tasks earlier defined in the connection handling scenarios CHS and received through the translated scenarios TRS. It is associated to a scenario class handler that is responsible for all housekeeping functions related to scenario initialisation; and
- one or more task processing classes instantiated according to the number of processors required by the system.

A control process unit class or class type CT0/CTN represents an independent entity, receiving events and requesting next events. These events may for instance be connection handling events or real time start and end indication events. How the received events and the related tasks are treated is typical for each control process class type. The dynamic analyser DA is adapted to provide a range of N types of control process unit classes CT0, CT1, ..., CTN, with N being an integer greather than 1. The types of control process unit classes are created under control of the simulation monitor MON and by using classes, e.g. queues, stacks interrupt chains, etc.., available in the dynamic analyser DA. All instances CI1 to CIM of each type of control process unit class CT0 to CTN are supervised by a class type handler TH0 to THN associated to a respective class type CT0 to CTN. The monitor MON controls (CM) the instantiation of a class type handler TH0/THN and this handler, in turn, controls the instantiations CI1/CIM of control process unit classes of the corresponding type. In more detail, the class type handler TH0/THN of a particular class type CT0/CTN provides the necessary member functions for automatic creation of instances CI1 to CIM of that type and as defined by scenario matrix files SC1 to SCJ derived from the received translated scenarios TRS.

The parameters and the number of user interface procedures available within a specific control process unit class depend on the complexity of the processor type. For instance, a processor with priority queues and interrupt handling will need more initialisation functions and parameters as compared to a single queue server, both receiving multiple delayed feedback.

The results of the analyse performed by the dynamic analyser DA represent the performances PRF of at least one telecommunication exchange in its environment. These results are divided in two categories:
- results concerning the internal behaviour of a single processor such as queue contents distributions; and
- results that depend on the multi-processor system behaviour such as response time distributions.

It is finally to be noted that the implementation of the above described software packages is relatively obvious for a person skilled in the art and is therefore not described in more detail here.

While the principles of the invention have been described above in connection with specific apparatus, it is to be clearly understood that this description is made only by way of example and not as a limitation on the scope of the invention.

## Claims

1. Telecommunication exchange simulator adapted to evaluate the operational parameters (GET, DIM, PRF) of a telecommunication exchange by processing connection handling events (CHE), characterized in that said connection handling events (CHE) are arranged in connection handling scenarios (CHS), each connection handling scenario (CHS) being a sequence of at least one of said connection handling events (CHE), and in that said telecommunication exchange simulator includes translation means (TM) adapted to generate translated scenarios (TRS) corresponding to said connection handling scenarios (CHS) adapted by taking into account processing execution times (PET) of said events (CHE) and parameters (OSP) representative of the operating system of at least one telecommunication exchange, and further includes analysis means (AM) coupled to said translation means (TM) and adapted to derive from said translated scenarios (TRS) said operational parameters (GET, DIM, PRF) of said exchange.

2. Telecommunication exchange simulator according to claim 1, characterized in that said translation means (TM) includes:
- telecommunication scenario generation means (TG) adapted to receive said connection handling scenarios (CHS) and said processing execution times (PET) and to derive therefrom telecommunication scenarios (TLS) corresponding to said connection handling scenarios (CHS) adapted by taking into account said processing execution times (PET);
- module generator means (MG) adapted to receive said operating system parameters (OSP) and to provide generic modules (OSM) under the form of scenarios defining sequences of operating system events; and
- combiner means (CO) adapted to combine said telecommunication scenarios (TLS) and said generic modules (OSM) into said translated scenarios (TRS).

3. Telecommunication exchange simulator according to claim 1, characterized in that said analysis means (AM) includes a static analysis means (SA) which is a software package coupled to said translation means (TM) and which is adapted to establish by running, from said translated scenarios (TRS), execution times (GET) of said connection handling scenarios (CHS) and dimensioning criteria (DIM) for said telecommunication exchange, said execution times (GET) and said dimensioning criteria (DIM) forming part of said operational parameters of said exchange.

4. Telecommunication exchange simulator according to claim 3, characterized in that said analysis means (AM) further includes a dynamic analysis means (DA) which is a software package coupled to said static analysis means (SA) and which is adapted to receive said translated scenarios (TRS), said dimensioning criteria (DIM) and load specifications (LSP) for said exchange, and to derive therefrom, by running, performances (PRF) of the telecommunication exchange in its environment, said performances (PRF) forming part of said operational parameters of said exchange.

5. Telecommunication exchange simulator according to claim 4, characterized in that said dynamic analysis means (DA) has an object oriented structure adapted to perform discrete event simulations.

6. Telecommunication exchange simulator according to claim 5, characterized in that said object oriented structure is adapted to instantiate (MON, CM) a plurality of class type handlers (TH0-THN), each of said class type handlers corresponding to a particular type of control process unit class (CT0-CTN), and in that each of said class type handlers is adapted to create a plurality of control process unit instances (CI1-CIM), each of said control process unit instances having the type of said control process unit class (CT0-CTN).

7. Telecommunication exchange simulator according to claim 1, characterized in that said processing execution times (PET) are measured during laboratory tests.

8. Telecommunication exchange simulator according to claim 1, characterized in that said operating system parameters (OSP) are measured during laboratory tests.

9. Telecommunication exchange simulator according to claim 1, characterized in that said connection handling scenarios (CHS), said processing execution times (PET) and said operating system parameters (OSP) are applied to said translation means (TM) in the form of sequence charts modifiable by means of a graphical editor.

10. Telecommunication exchange simulator according to claim 2, characterized in that said telecommunication scenarios (TLS) and said generic modules (OSM) are applied to said combiner means (CO) in the form of sequence charts modifiable by means of a graphical editor, and in that said translated scenarios (TRS) are in a matrix file format.
